# EUROPEAN PATENT SPECIFICATION

(11) **EP 1 793 204 B1**
(45) Date of publication and mention of the grant of the patent: **05.05.2010**
(21) Application number: 06024559.4
(22) Date of filing: 27.11.2006
(51) Int. Cl.: G01C 21/34, G08G 1/0968

(54) **System for and method of providing lane guidance**
Vorrichtung und Verfahren zur Bereitstellung von Fahrspurführungshinweisen
Dispositif et procédé pour fournir des indications de guidage de voie

(30) Priority: 30.11.2005 JP 2005346663
(43) Date of publication of application: 06.06.2007
(73) Proprietor: Aisin AW Co., Ltd., Fujii-cho Anjo-shi, Aichi 444-1192 (JP)
(72) Inventor: Nakayama, Takaaki Aisin AW Co., Ltd., Okazaki-shi Aichi 444-8564 (JP); Oonishi, Shino Aisin AW Co., Ltd., Okazaki-shi Aichi 444-8564 (JP); Takeuchi, Kensuke Aisin AW Co., Ltd., Okazaki-shi Aichi 444-8564 (JP)
(74) Representative: Kramer - Barske - Schmidtchen

(56) References cited:
- EP-A- 1 074 960
- EP-A1- 0 803 853
- DE-A1- 10 327 869

## Description

The present invention relates to a route guidance system and a route guidance method.

In a conventional navigation system, the current position of a vehicle that is a host vehicle, that is, one's current position, is detected by a Global Positioning System (GPS) device, for example. Map data is read out from a data storage portion, and a map screen is formed on a display unit. The host vehicle position, which indicates one's current position, a map of the area surrounding the host vehicle position, and the like are displayed on the map screen. Therefore, a driver can drive the vehicle according to the host vehicle position that is displayed on the map screen.

When the driver inputs a destination and sets search conditions, route search processing is executed based on the search conditions, and a route to the destination from a departure position, which is expressed as the current position, is sought according to the map data. A route that is specified, that is, a specified route, is displayed on the map screen together with the host vehicle position. Guidance along the specified route, that is, route guidance, is executed. Therefore, the driver can drive the vehicle along the specified route that is displayed.

Incidentally, in route guidance, when there is a specific intersection at which the vehicle must turn right or left, route guidance is executed, such as by voice output, for example, before the vehicle arrives at the intersection, which is a guidance intersection. In order for route guidance to be executed, one or more guidance points are set at locations at set distances before the guidance intersection along the specified route. When the vehicle arrives at the guidance points, guidance with a content that is set in advance for each of the guidance points is output by voice. (Refer to Japanese Patent Application Publication No. JP-A-6-295399, for example.)

Also, when route guidance is executed, if a plurality of lanes exists in the road to the guidance intersection, a specific lane is set as a recommended lane, and lane guidance is provided so that the vehicle will drive in the recommended lane, so that the vehicle can enter the guidance intersection smoothly and exit the guidance intersection smoothly.

However, in the conventional navigation system described above, if the driver fails to hear the route guidance, or if the vehicle must turn right at the guidance intersection, but the recommended lane is the most left lane , the driver may be unable to drive the vehicle according to the lane guidance and end up driving in a lane other than the recommended lane by mistake. That is, it is sometimes impossible to drive the vehicle along the specified route.

Moreover, even if the vehicle is already traveling in the recommended lane, lane guidance is provided repeatedly, so the driver feels that the superfluous lane guidance is annoying.

EP 0 803 853 A1 relates to a navigation system for a vehicle which provides route guidance to an input destination, wherein an output of a lane guidance is controlled in response to a vehicle speed.

DE 102 27 869 A1 relates to a navigation system, wherein lanes of a route are acquired, based on the acquired lanes a lane on which a vehicle currently drives is determined, and the lane on which the vehicle drives is taken into account for providing target guidance information.

EP-A-1 074 960 describes a route guidance system for a host vehicle, comprising a GPS receiver adapted to detect a current position. The system searches for an optimum route from a current position to a destination, and based on the optimum route a recommended lane is set on a road. A lane guidance processor leads the host vehicle into the recommended lane, determines whether the host vehicle is travelling on the recommended lane, based on the host vehicle position, and selectively suspends lane guidance when it is determined that the host vehicle is already travelling on the recommended lane.

It is an object of the present invention to provide a route guidance system and a route guidance method that solve a problem of the conventional navigation system by allowing the vehicle to travel reliably according to lane guidance, without making the driver feel annoyed by superfluous lane guidance.

For this purpose, the route guidance system according to the present invention includes a current position detection portion that detects a current position of a host vehicle as a host vehicle position; a route search processing portion that searches for a specified route to a destination, based on the host vehicle position; a recommended lane setting processing portion that sets a recommended lane on a road, based on the specified route; a lane guidance processing portion that executes lane guidance to lead the host vehicle into the recommended lane; and a vehicle movement determination processing portion that determines a movement direction of the host vehicle based on the host vehicle position and the recommended lane.

Also, the lane guidance processing portion selectively suspends (or provides) lane guidance based on the movement of the host vehicle.

According to the present invention, the movement of the host vehicle is determined based on the host vehicle position and the recommended lane, and lane guidance is suspended based on the movement of the host vehicle, so the driver ceases to feel annoyed by superfluous lane guidance.

Moreover, for example, when the driver fails to hear the route guidance, or when the vehicle must turn right at a guidance intersection, but the recommended lane is the most left lane , for example, the vehicle can reliably be driven according to the lane guidance.

It is therefore possible to prevent the vehicle from being driven in a lane other than the recommended lane by mistake, so the vehicle can be driven along the specified route.

Further features and advantages follow from the description of an embodiment referring to the drawings, of which:
FIG. 1 is a diagram showing a navigation system according to an embodiment of the present invention;
FIG. 2 is a flowchart showing the operation of a lane guidance processing portion according to the embodiment of the present invention; and
FIG. 3 is an explanatory drawing of lane guidance processing according to the embodiment of the present invention.

An embodiment of the present invention will be explained below with reference to the drawings, wherein the navigation system is explained as a route guidance system.

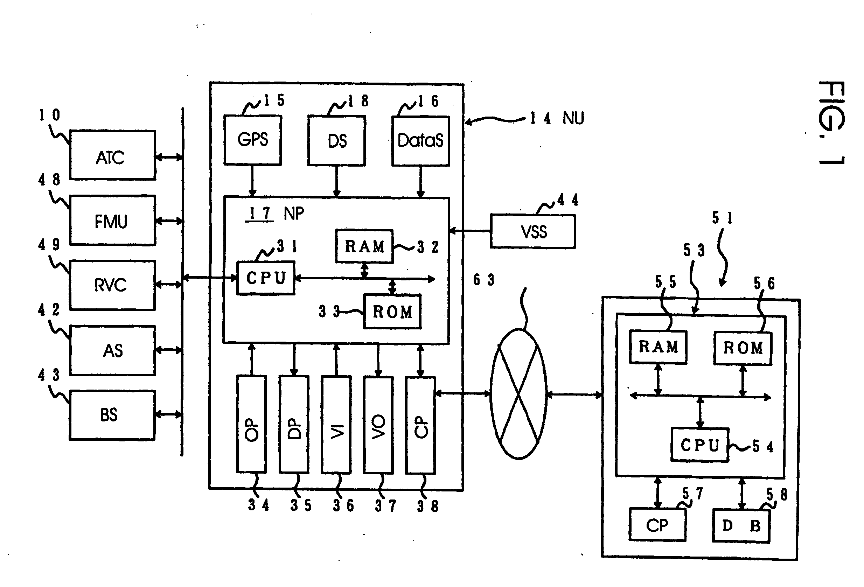

In FIG. 1, the reference numeral 10 denotes an automatic transmission control portion that serves as a power train control portion. The automatic transmission control portion 10 controls a power train that shifts gears at a prescribed gear ratio, such as a continuously variable transmission (CVT) that serves as an automatic transmission, a stepped transmission (automatic transmission), an electric drive unit, or the like.

The reference numeral 14 denotes a navigation unit that serves as an information terminal, such as an on-board unit that is mounted in a vehicle. The reference numeral 63 denotes a network, and the reference numeral 51 denotes an information center that serves as an information provider. A navigation system is made up of the automatic transmission control portion 10, the navigation unit 14, the network 63, the information center 51, and the like.

The navigation unit 14 includes a Global Positioning System (GPS) sensor 15, a data storage portion 16, a navigation processing portion 17, a direction sensor 18, an operation portion 34, a display portion 35, a voice input portion 36, a voice output portion 37, and a communications portion 38. The GPS sensor 15 serves as a current position detection portion that detects the current position of the host vehicle. The data storage portion 16 serves as an information storage portion where map data and various other types of data are stored. The navigation processing portion 17 carries out various types of computational processing, such as navigation processing and the like, based on information that is input. The direction sensor 18 serves as a direction detection portion that detects the vehicle's direction. The operation portion 34 serves as a first input portion, by operating which the driver, who is the operator, makes a prescribed input. The display portion 35 serves as a first output portion that uses images displayed on a screen not shown in FIG. 1 to express various types of information and notify the driver. The voice input portion 36 serves as a second input portion for making a prescribed input by voice. The voice output portion 37 serves as a second output portion that uses voice to output various types of information and notify the driver. The communications portion 38 serves as a transmitting and receiving portion that functions as a communications terminal. The GPS sensor 15, the data storage portion 16, the direction sensor 18, the operation portion 34, the display portion 35, the voice input portion 36, the voice output portion 37, and the communications portion 38 are connected to the navigation processing portion 17.

Also connected to the navigation processing portion 17 are the automatic transmission control portion 10, a forward monitoring unit 48, a rear view camera (rear monitoring camera) 49, an accelerator sensor 42, a brake sensor 43, a vehicle speed sensor 44, and the like. The forward monitoring unit 48 is installed at a prescribed location on the front end of the vehicle and monitors the area in front of the vehicle. The rear view camera 49 is installed at a prescribed location on the rear end of the vehicle and serves as a photography unit that captures images of the area behind the vehicle and as a rear monitoring unit. The accelerator sensor 42 serves as an engine load detection portion that detects the driver's operation of the accelerator pedal based on the accelerator angle. The brake sensor 43 serves as a braking detection portion that detects the driver's operation of the brake pedal based on the amount by which the pedal is depressed. The vehicle speed sensor 44 serves as a vehicle speed detection portion that detects the vehicle speed. Note that the accelerator sensor 42, the brake sensor 43, and the like make up an operation information detection portion that detects information on the operation of the vehicle by the driver.

The GPS sensor 15 detects the vehicle's current position on the Earth, as well as the time, by receiving radio waves generated by a satellite. In this embodiment, the GPS sensor 15 is used as the current position detection portion, but a distance sensor, a steering sensor, an altimeter, or the like not shown in FIG. 1 can also be used individually or in combination instead of the GPS sensor 15. A gyroscopic sensor, a geomagnetic sensor, or the like can be used as the direction sensor 18. Note that in this embodiment, the direction sensor 18, the vehicle speed sensor 44, and the like are installed, but where a GPS sensor having functions to detect the host vehicle direction, the vehicle speed, and the like is used, the direction sensor 18, the vehicle speed sensor 44, and the like are not necessary.

The data storage portion 16 is provided with a map data base made up of map data files, and map data is stored in the map data base. The map data includes intersection data pertaining to intersections, node data pertaining to nodes, road data pertaining to road links, search data that is processed for searching, facilities data pertaining to facilities, and the like, as well as local feature data pertaining to local features on a data.

The local features are made up of displays installed or formed on the road to provide various kinds of driving-related information and guidance to drivers. These displays include marking lines, indicators, pedestrian crosswalks, manholes, traffic signals, and the like. Marking lines include stop lines to stop vehicles, lane demarcation lines that delineate the boundaries of lanes, demarcation lines that delineate parking spaces, and the like. Indicators include lane differentiation indicators in the form of arrows in each lane to indicate the direction of travel, and guidance indicators, such as the word "Stop" and the like, which warn of an approaching location where the vehicle must stop momentarily. Guidance indicators may also include phrases such as "To (place name)" and the like, which provide directional guidance. The local feature data include position information, which describes the position of each feature in terms of coordinates and the like, and image information, which shows an image of each feature. Note that for locations where the vehicle must stop momentarily, the information includes places where vehicles enter main roads from side roads, crossings, intersections with flashing red lights, and so on.

The road data pertaining to the lanes include lane data, including lane numbers that are assigned to each lane on a road, lane position information, and the like. Data are also stored in the data storage portion 16 in order for the voice output portion 37 to output prescribed information.

A statistical data base made up of statistical data files and a driving history data base made up of driving history data files are also stored in the data storage portion 16. The statistical data in the statistical data files and the driving history data in the driving history data files are stored as actual results data.

The statistical data is actual traffic information provided in the past, that is, historical information that describes a history. Traffic information provided in the past by traffic information centers and the like (not shown in FIG. 1) as information providers, such as the Vehicle Information and Communication System (VICS) center and the like, traffic census information, which is data on traffic volumes from traffic censuses provided by the Ministry of Land Infrastructure and Transport, and road timetable information and the like, also provided by the Ministry of Land Infrastructure and Transport, are used individually or in combination. The statistical data is created by refining the information as necessary, then carrying out statistical processing. Note that congestion forecasting information and the like for forecasting congestion and other purposes can be added. In that case, when the statistical data is created, detailed conditions are added to the historical information, such as information on dates and times, days of the week, weather, various types of events, seasons of the year, facilities (the presence or absence of department stores, supermarkets, and the like), and the like.

Also, the data items in the statistical data are made up of link numbers for various road links, direction flags to indicate the direction of travel, information classifiers that show the type of information, degrees of congestion at specific times, link required times that describe the times required to travel on various road links at specific times, data on link required times averaged for each day of the week (for example, average time for Wednesday), and the like.

The driving history data is made up of information collected by the information center 51 from a plurality of vehicles, i.e., the host vehicle and other vehicles, and represents actual driving records of vehicles traveling on roads where each vehicle has traveled. That is, it is actual history information that describes driving records, and based on the driving data, probe data is computed and accumulated.

The data items in the driving history data are made up of link required times at specific times when vehicles traveled on each road link, degrees of congestion at specific times when vehicles traveled on each road link, and the like. Note that the driving history data can be added to the statistical data. In this embodiment, the degree of congestion is used as a congestion indicator that expresses the scale of congestion. Congestion, crowding, and non-congestion are expressed separately.

In order to store the various types of data, the data storage portion 16 includes a disk not shown in FIG. 1, such as a hard disk, a CD, a DVD, an optical disk, or the like. The data storage portion 16 also includes a read/write head or the like for reading and writing the various type of data. It is also possible to use a memory card or the like for the data storage portion 16. Note that an external storage device is formed by the various disks, the memory card, or the like.

In this embodiment, the map data base, the statistical data base, the driving history data base, and the like are built in the data storage portion 16, but the map data base, the statistical data base, the driving history data base, and the like can also be built in the information center 51.

The navigation processing portion 17 includes a CPU 31, a RAM 32, a ROM 33, and a flash memory that is not shown in FIG. 1. The CPU 31 serves as a control device that controls the entire navigation unit 14 and as a computation device. The RAM 32 is used as working memory when the CPU 31 performs various types of computational processing. The ROM 33 contains a control program, as well as various types of programs that search for routes to destinations, execute route guidance, and so on. The flash memory is used to store various types of data, programs, and the like. Note that an internal storage device is formed by the RAM 32, the ROM 33, the flash memory, or the like.

In this embodiment, various types of programs can be stored in the ROM 33, and various types of data can be stored in the data storage portion 16, but programs, data, and the like can also be stored on a disk or the like. In that case, programs, data, and the like that are read from the disk or the like can be written to the flash memory. The programs, data, and the like can therefore be updated by replacing the disk or the like. The control programs, data, and the like of the automatic transmission control portion 10 can also be stored on the disk or the like. The programs, data, and the like can be received through the communications portion 38 and written to the flash memory in the navigation processing portion 17.

The operation portion 34 executes such tasks as correcting the current position when the vehicle starts to move, inputting a departure point and a destination, inputting points to be passed, and operating the communications portion 38, all according to the driver's operations. The operation portion 34 can use a keyboard, mouse, or the like (not shown in FIG. 1) that is installed independently of the display portion 35. The operation portion 34 can also use a touch panel that is capable of executing prescribed input operations that are done by touching or clicking on an image operation portion, such as various types of keys, switches, buttons, and the like that are displayed as images on a screen that is formed by the display portion 35.

The display portion 35 is used as a display. Also, the various screens that are formed on the display portion 35 can display the vehicle's current position as the host vehicle's position; the vehicle's direction as the host vehicle's direction; maps, the specified route, guidance information along the specified route, traffic information, and the like; the distance to the next intersection on the specified route and the direction of travel at the next intersection. The screens can also display operation guidance, operation menus, and key guidance for the image operation portion, the operation portion 34, the voice input portion 36, and the like. The screens can also display programs and the like that are broadcast by FM multiplex.

The voice input portion 36 includes a microphone that is not shown in FIG. 1 and can input required information by voice. The voice output portion 37 includes a voice synthesizing unit and a speaker, which are not shown in FIG. 1. The voice output portion 37 outputs the specified route, the guidance information, the traffic information, and the like by means of a voice that is synthesized by the voice synthesizing unit, for example.

The communications portion 38 includes a beacon receiver and an FM receiver for receiving various types of the information, such as current traffic information that is transmitted from the traffic information center, general information, and the like. The beacon receiver receives the information as radio wave signals or optical signals via radio wave beacons or optical beacons installed along the road. The FM receiver receives the information as FM multiplex broadcasts via an FM broadcast station. Note that the traffic information includes congestion information, regulatory information, parking space information, traffic accident information, service area congestion status information, and the like. The general information includes news, weather forecasts, and the like. The beacon receiver and the FM receiver are combined in a single VICS receiver, but they can also be installed separately.

The traffic information contains an information classification that defines the type of information, a mesh number that specifies a mesh, a link number that specifies a road link connecting two points (e.g., two intersections) and also distinguishes between inbound and outbound halves of the road, link information that constitutes the content of the information that is provided for the corresponding link number, and the like. For example, if the traffic information is congestion information, the link information is made up of congestion leading edge data, which tells the distance from the start of the road link to the leading edge of the congestion; the degree of congestion; a congestion length, which tells the distance from the leading edge of the congestion to its trailing edge; the link required time, which tells the time required to travel the road link; and so on.

The communications portion 38 can also receive map data, statistical data, driving history data, and the like, as well as various types of the information such as traffic information, general information, and the like, via the network 63.

For that reason, the information center 51 includes a server 53, a communications portion 57 connected to the server 53, a data base 58 that serves as an information storage portion, and so on. The server 53 includes a CPU 54, a RAM 55, and a ROM 56. The CPU 54 serves as a control device and as a computation device. The data base 58 stores the same sort of data that is stored in the data storage portion 16, such as map data statistical data, and driving history data, for example. The information center 51 can also provide in real time various types of the information, such as current traffic information that is transmitted from the traffic information center, general information, and the like, as well as driving history data that is collected from a plurality of vehicles (the host vehicle and other vehicles).

The forward monitoring unit 48 is made up of a radar, such as a laser radar, a millimeter-wave radar, or the like, or an ultrasonic sensor or the like, or a combination of a radar or the like and an ultrasonic sensor or the like. The forward monitoring unit 48 monitors a vehicle that is traveling ahead of the host vehicle, that is, a vehicle ahead, and also monitors momentary stopping points, obstacles, and the like. The forward monitoring unit 48 also detects the relative speed, which is the vehicle speed relative to the vehicle ahead, the approach speed in relation to momentary stopping points, the approach speed in relation to obstacles, the distance to the vehicle ahead, the time to the vehicle ahead, and the like, all as information about the area around the host vehicle.

The rear view camera 49 is made up of a CCD device and is mounted so that its optical axis tilts downward in order to monitor the area behind the vehicle. In addition to local features, the subjects for image capture include a vehicle traveling behind the host vehicle, that is, a vehicle behind, buildings and other structures on the roadside, and the like. The rear view camera 49 generates image data of the photographed subjects and sends the data to the CPU 31. The CPU 31 reads the image data and executes image processing on the image data to recognize individual photographed subjects as recognized objects. In this embodiment, a CCD device is used as the rear view camera 49, but a C-MOS device or the like can be used.

Note that the navigation system, the control portion 10, the navigation processing portion 17, the CPUs 31, 54, the server 53, and the like function as computers, independently or in combinations of two or more, and execute computational processing based on various types of programs, data, and the like. Also, storage media are made up of the data storage portion 16, the RAMs 32, 55, the ROMs 33, 56, the data base 58, the flash memories, and the like. Also, microprocessors or the like can be used as computation devices in place of the CPUs 31, 54.

Next, the basic operation of the navigation system described above will be explained.

First, when the driver operates the operation portion 34 and the navigation unit 14 starts up, a navigation initialization processing portion (not shown in FIG. 1) of the CPU 31 1 executes navigation initialization processing, reads the current position of the host vehicle detected by the GPS sensor 15, reads the host vehicle direction detected by the direction sensor 18, and initializes various types of data. Next, a matching processing portion (not shown in FIG. 1) of the CPU 31 executes matching processing and specifies the current position by judging on which road link the current position lies, based on the track of the current position that was read, the shapes and arrangement of the various road links that make up the roads in the vicinity of the current position, and so on.

Also, in this embodiment, the matching processing portion further specifies the current position based on the positions of various local features that are photographed subjects photographed by the rear view camera 49.

For that purpose, an image recognition processing portion of the CPU 31, not shown in FIG. 1, executes image recognition processing, reading in image data from the rear view camera 49 and recognizing a local feature in an image formed from the image data. Also, a distance computation processing portion of the CPU 31, not shown in FIG. 1, executes distance computation processing, computing a distance from the rear view camera 49 to the actual local feature, based on the position of the local feature in the image. A current position specification processing portion of the matching processing portion executes current position specification processing, reading in the distance to the local feature and reading local feature data from the data storage portion 16 to obtain the coordinates of the local feature, then specifying the current position based on the coordinates and the distance to the local feature.

A lane detection processing portion of the CPU 31, not shown in FIG. 1, executes lane detection processing, detecting the lane in which the host vehicle is currently driving, that is, the current driving lane, by checking a local feature that was recognized based on the image data against the local feature data that are read from the data storage portion 16.

The lane detection processing portion can detect the current driving lane by reading the sensor output from the geomagnetic sensor, judging whether or not a detected object consisting of a strongly magnetic object such as a manhole cover or the like is present in a given lane on the road, based on the sensor output, and then detecting the driving lane based on that judgment. The lane detection processing portion can also detect the current driving lane by using the highly accurate GPS sensor 15 to detect the current position with high accuracy, then detecting the lane based on the current position detection result. As necessary, the lane detection processing portion can also detect the current driving lane by combining the geomagnetic sensor output, the current position, and the like at the same time that it executes image processing on image data of marking lines.

A basic information acquisition processing portion of the CPU 31, not shown in FIG. 1, executes basic information acquisition processing, obtaining map data from the data storage portion 16 or receiving map data from the information center 51 or the like via the communications portion 38. Note that when map data is obtained from the information center 51 or the like, the basic information acquisition processing portion writes the received data to the flash memory.

A display processing portion of the CPU 31, not shown in FIG. 1, executes display processing, forming various types of screens on the display portion 35. For example, a map display processing portion of the display processing portion executes map display processing, forming a map display screen on the display portion 35 that displays the current position as the host vehicle position and the vehicle direction as the host vehicle direction, while also displaying maps of the areas surrounding the map screen.

Therefore, the driver is able to drive the vehicle according to the map, the host vehicle position, and the host vehicle direction.

When the driver operates the operation portion 34 to input a destination, a destination setting processing portion of the CPU 31, not shown in FIG. 1, executes destination setting processing and sets the destination. Note that the departure point can also be input and set as necessary. It is also possible to register a given location in advance, then set the registered location as the destination. When the driver operates the operation portion 34 to input a search condition, a search condition setting processing portion of the CPU 31, not shown in FIG 1, executes search condition setting processing and sets the search condition.

When the destination and search condition are set in this manner, a route search processing portion of the CPU 31, not shown in FIG. 1, executes route search processing. The route search processing portion reads the current position, the destination, the search condition, and the like, and also reads search data and the like from the data storage portion 16. Based on the current position, the destination, and the search data, the route search processing portion searches for a route from the departure point, expressed as the current position, to the destination, according to the search condition. The route search processing portion outputs route data that describe the specified route. The specified route is the route for which the total of the link costs assigned to each road link is the lowest.

Also, if a plurality of lanes are formed in the road, and if the current driving lane has been detected, the route search processing portion specifies individual lanes in the specified route. In that case, the lane numbers of the driving lanes and the like are included in the route data.

Note that route search processing can be executed at the information center 51. In that case, the CPU 31 transmits the current position, the destination, the search condition, and the like to the information center 51 via the network 63. When the information center 51 receives the current position, the destination, the search condition, and the like, a route search processing portion of the CPU 54, not shown in FIG. 1, executes route search processing in the same manner as CPU 31. The route search processing portion reads search data from the data base 58 and based on the current position, the destination, and the search data, searches for a route from the departure point to the destination, according to the search condition. The route search processing portion outputs route data that describe the specified route. Next, a transmission processing portion of the CPU 54, not shown in FIG. 1, executes transmission processing, transmitting the route data to the navigation unit 14 via the network 63.

Next, a guidance processing portion of the CPU 31, not shown in FIG. 1, executes guidance processing and provides route guidance. For this purpose, a route display processing portion of the guidance processing portion executes route display processing, reading the route data and displaying the specified route on the map screen according to the route data.

Incidentally, when the vehicle must turn right or left at a prescribed intersection, the intersection is set as a guidance point and as a guidance intersection for route guidance. For that purpose, a guidance intersection setting processing portion of the guidance processing portion executes guidance intersection setting processing. The guidance intersection setting processing portion determines, according to the route data, that is, based on the specified route, whether or not there is an intersection where the vehicle must turn right or left. If there is an intersection where the vehicle must turn right or left, the intersection is set as a guidance intersection.

When individual lanes have been specified in the specified route, a recommended lane setting processing portion of the guidance processing portion executes recommended lane setting processing, selecting lanes that are recommended as the ones in which the vehicle should travel and setting them as the recommended lanes. For example, when the vehicle passes through a guidance intersection, the recommended lane setting processing portion selects and sets a suitable lane for entering the guidance intersection, a suitable lane for exiting the guidance intersection, and so on. Also, the route display processing portion, in addition to displaying the specified route on the map screen, displays an enlarged map of the road where the vehicle is traveling, that is, an enlarged road map, in a specified area of the map screen and uses the enlarged road map to provide lane guidance. In this case, all of the lanes, as well as the specifically recommended lanes, are displayed on the enlarged road map.

Next, a voice output processing portion of the guidance processing portion executes voice output processing, outputting route guidance by voice from the voice output portion 37. For this purpose, a route guidance point setting processing portion of the voice output processing portion executes route guidance point setting processing, setting one or more route guidance points at locations at pre-set distances before the guidance intersection on the specified route (i.e., on the side of the guidance intersection where the host vehicle is located). Also, a point guidance processing portion of the voice output processing portion executes point guidance processing. When the vehicle arrives at a route guidance point, route guidance is provided for the guidance intersection with a content that is set in advance for each of the route guidance points, such as the distance from the host vehicle position to the guidance intersection, whether the vehicle turns left or right at the guidance intersection, and the like. Also, if the recommended lane has been set, a lane guidance processing portion of the point guidance processing portion executes lane guidance processing, providing lane guidance with a content that is set in advance for each of the route guidance points, such as each recommended lane from the host vehicle position to the guidance intersection, the recommended lane beyond the guidance intersection, and the like.

Also, an enlarged intersection map display processing portion of the guidance processing portion executes enlarged intersection map display processing. Before the vehicle arrives at the guidance intersection, the enlarged intersection map display processing portion displays an enlarged map of the guidance intersection, that is, an enlarged intersection map, in a specified area of the map screen and uses the enlarged intersection map to provide route guidance. In this case, a map of the area surrounding the guidance intersection, the specified route, and landmarks such as facilities and the like at the guidance intersection are displayed on the enlarged intersection map. If lane guidance is being provided, the recommended lanes are also displayed.

Incidentally, when lane guidance is provided by voice, if the driver fails to hear the route guidance, or if the vehicle must turn right at the guidance intersection, but the recommended lane is the most left lane , the driver may be unable to drive the vehicle according to the lane guidance and end up driving in a lane other than the recommended lane by mistake, thus becoming unable to drive the vehicle along the specified route.

Also, for example, when the driver has changed into the recommended lane, if lane guidance is provided repeatedly, even if the vehicle is already traveling in the recommended lane, the driver feels that the superfluous lane guidance is annoying.

Therefore, in this embodiment, lane guidance is provided in accordance with the movement of the vehicle.

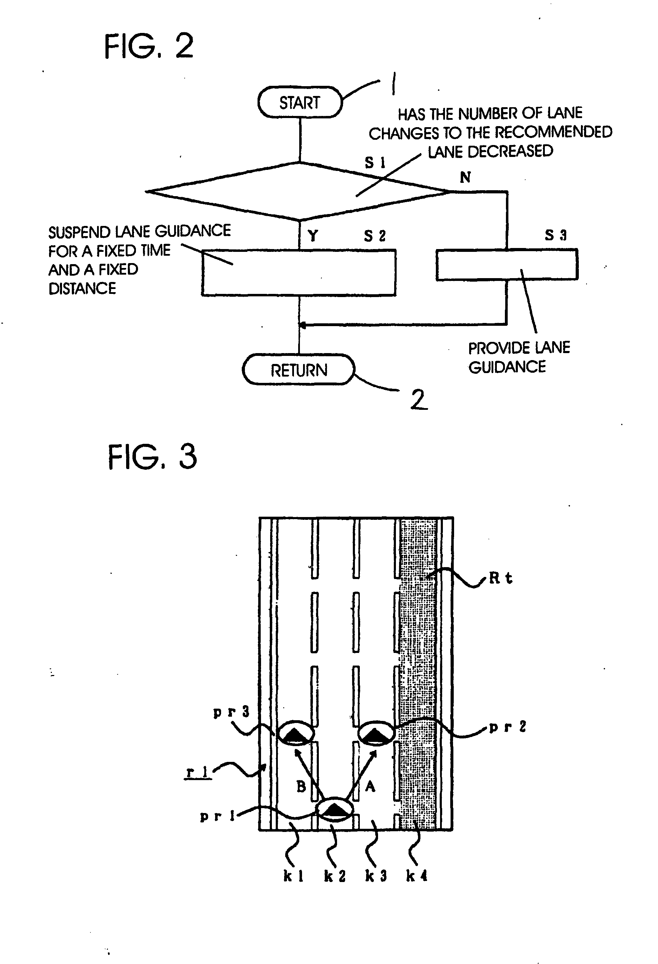

FIG. 2 is a flowchart showing the operation of the lane guidance processing portion according to this embodiment of the present invention. FIG. 3 is an explanatory drawing of lane guidance processing according to this embodiment of the present invention.

In FIG. 3, the reference numerals pr1 to pr3 denote host vehicle positions, the reference numeral r1 denotes the road, the reference numeral Rt denotes the specified route, the reference numerals k1 to k4 denote lanes, and the lane k4 is the recommended lane.

When the recommended lane k4 is set by the recommended lane setting processing portion and lane guidance is executed by the lane guidance processing portion to lead the vehicle into the recommended lane, a vehicle movement determination processing portion of the guidance processing portion executes vehicle movement determination processing to determine the movement of the vehicle. For that purpose, the vehicle movement determination processing portion reads the host vehicle position pr1 at the time that lane guidance is executed, and starts measuring time by means of a timer not shown in FIG. 1. When a prescribed time interval τ1 has elapsed after the lane guidance was executed, the vehicle movement determination processing portion reads the host vehicle position pr2 or pr3. Note that the time interval τ1 is set only to a length of time at which the direction of movement from the host vehicle position pr1 can be determined, for example, the time required for the vehicle to move into an adjacent lane.

Next, the vehicle movement determination processing portion, based on the relationship between the recommended lane and the host vehicle position pr2 or pr3, determines the direction of vehicle movement by determining whether the number of lane changes necessary to move into the recommended lane from the host vehicle position in the lane k3 or the lane k1 has changed or not. In this embodiment, the direction of vehicle movement is determined by determining whether the number of lane changes has decreased or not. Specifically, if the number of lane changes has decreased, the vehicle movement determination processing portion determines that the vehicle has moved in a direction of approaching the recommended lane (hereinafter called the approaching direction), as shown by arrow A. If the number of lane changes has not changed, the vehicle movement determination processing portion determines that the vehicle has moved in a direction parallel to the recommended lane (hereinafter called the parallel direction). If the number of lane changes has increased, the vehicle movement determination processing portion determines that the vehicle has moved in a direction of separating from the recommended lane (hereinafter called the separating direction), as shown by arrow B.

Next, when the vehicle has moved in the approaching direction, the lane guidance processing portion suspends lane guidance for a prescribed interval. For that purpose, a guidance suspension processing portion of the lane guidance processing portion executes guidance suspension processing. The guidance suspension processing portion uses the point in time when the movement direction was determined as a guidance suspension starting time and starts measuring time using the timer. The guidance suspension processing portion also takes the vehicle position at the point in time when the movement direction was determined and records it in the RAM 32 as a guidance suspension starting position. The guidance suspension processing portion then does not execute lane guidance until the vehicle has traveled for a fixed time interval τ2 after the guidance suspension starting time and for a fixed distance Lx from the guidance suspension starting position.

Note that even if the time interval τ2 elapses, if the vehicle has not traveled the distance Lx, it is conceivable that traffic is congested, so the lane guidance processing portion does not execute lane guidance. Similarly, even if the vehicle has traveled the distance Lx, if the time interval τ2 has not elapsed, it is conceivable that the driver remembers the most recent lane guidance, so the lane guidance processing portion does not execute lane guidance.

By contrast, when the vehicle has moved in the parallel direction or the separating direction, the lane guidance processing portion executes lane guidance.

Therefore, when the vehicle has moved in the approaching direction in relation to the recommended lane, lane guidance is suspended, so that lane guidance is not executed repeatedly in cases where, for example, the vehicle is trying to move into the recommended lane, the vehicle is already traveling in the recommended lane, and so on. The driver therefore ceases to feel annoyed by superfluous lane guidance.

Moreover, because lane guidance is executed when the vehicle has moved in the parallel direction or the separating direction, such as when the driver fails to hear the lane guidance, or when the vehicle must turn right at the guidance intersection, but the recommended lane is the most left lane, for example, the vehicle can reliably be driven according to the lane guidance. It is therefore possible to prevent the vehicle from being driven in a lane other than the recommended lane by mistake, so the vehicle can be driven along the specified route.

Next, the flowchart will be explained.
At step S1, the system determines whether or not the number of lane changes to the recommended lane has decreased. If the number of lane changes to the recommended lane has decreased, control passes to step S2. If the number of lane changes to the recommended lane has not decreased, control passes to step S3.
At step S2, the system suspends lane guidance for a fixed time and a fixed distance, after which control returns.
At step S3, the system executes lane guidance, after which control returns.

Note that the present invention is not limited by the embodiment described above. Various modifications can be made based on the purpose of the present invention, and it is intended that all modifications within the scope of the present invention as defined in the claims be included.
FIG. 1
   10/ AUTOMATIC TRANSMISSION CONTROL PORTION (ATC)
   48/ FORWARD MONITORING UNIT (FMU)
   49/ REAR VIEW CAMERA (RVC)
   42/ ACCELERATOR SENSOR (AS)
   43/ BRAKE SENSOR (BS)
   15/ GPS SENSOR (GPS)
   18/ DIRECTION SENSOR (DS)
   16/ DATA STORAGE PORTION (DataS)
   17/ NAVIGATION PROCESSING PORTION (NP)
   34/ OPERATION PORTION (OP)
   35/ DISPLAY PORTION (DP)
   36/ VOICE INPUT PORTION (VI)
   37/ VOICE OUTPUT PORTION (VO)
   38/ COMMUNICATIONS PORTION (CP)
   14/ NAVIGATION UNIT (NU)
   44/ VEHICLE SPEED SENSOR (VSS)
   63/ NETWORK
   51/ INFORMATION CENTER
   57/ COMMUNICATIONS PORTION (CP)
   58/ DATA BASE (DB)
FIG. 2
   1/ START
   S1/ HAS THE NUMBER OF LANE CHANGES TO THE RECOMMENDED LANE DECREASED?
   S2/ SUSPEND LANE GUIDANCE FOR A FIXED TIME AND A FIXED DISTANCE
   S3/ PROVIDE LANE GUIDANCE
   2/ RETURN

## Claims

1. A route guidance system, comprising:
a current position detection portion (15,18) adapted to detect a current position of a host vehicle as a host vehicle position;
a route search processing portion (31) adapted to search for a specified route to a destination, based on the host vehicle position;
a recommended lane setting processing portion (31) adapted to set a recommended lane on a road, based on the specified route;
a lane guidance processing portion (31) adapted to execute lane guidance to lead the host vehicle into the recommended lane; and
a vehicle movement determination processing portion (31) adapted to determine a movement of the host vehicle with respect to the recommended lane based on the host vehicle position, wherein
the lane guidance processing portion (31) is adapted to selectively suspend lane guidance based on the determined movement of the host vehicle.

2. The route guidance system according to claim 1, wherein the vehicle movement determination processing portion (31) is adapted to determine the movement direction of the host vehicle based on whether the number of lane changes required to change from the driving lane of the host vehicle position to the recommended lane has decreased or not.

3. The route guidance system according to claim 2, wherein the lane guidance processing portion (31) is adapted to suspend lane guidance when the number of lane changes has decreased.

4. The route guidance system according to one of claims 1 to 3, wherein the lane guidance processing portion (3 1) is adapted to suspend lane guidance for a fixed time interval and a fixed distance.

5. A route guidance method, comprising the steps of:
detecting a current position of a host vehicle as a host vehicle position;
searching for a specified route to a destination, based on the host vehicle position;
setting a recommended lane on a road, based on the specified route;
executing lane guidance to lead the host vehicle into the recommended lane;
determining a movement of the host vehicle with respect to the recommended lane based on the host vehicle position; and
selectively suspending lane guidance based on the determined movement of the host vehicle.

## Patentansprüche

1. Routenführungssystem, mit
einem gegenwärtige-Position-Detektionsbereich (15, 18), der angepasst ist zum Detektieren einer gegenwärtigen Position eines Hostfahrzeugs als eine Hostfahrzeugposition;
einem Routensuchverarbeitungsbereich (31), der angepasst ist zum Suchen nach einer spezifizierten Route zu einem Ziel basierend auf der Hostfahrzeugposition;
einem empfohlene-Fahrspur-Einstellungsverarbeitungsbereich (31), der angepasst ist zum Einstellen einer empfohlenen Fahrspur auf einer Straße basierend auf der spezifizierten Route;
einem Fahrspurführungsverarbeitungsbereich (31), der angepasst ist zum Durchführen einer Fahrspurführung zum Führen des Hostfahrzeugs in die empfohlene Fahrspur; und
einem Fahrzeugbewegungsbestimmungsverarbeitungsbereich (31), der angepasst ist zum Bestimmen einer Bewegung des Hostfahrzeuges bezüglich der empfohlenen Fahrspur basierend auf der Hostfahrzeugposition, wobei
der Fahrspurführungsverarbeitungsbereich (31) angepasst ist zum selektiven Aussetzen der Fahrspurführung basierend auf der bestimmten Bewegung des Hostfahrzeugs.

2. Routenführungssystem nach Anspruch 1, bei dem der Fahrzeugbewegungsbestimmungsverarbeitungsbereich (31) angepasst ist zum Bestimmen der Bewegungsrichtung des Hostfahrzeugs basierend darauf, ob die Anzahl von Fahrspurwechseln, die erforderlich ist, um von der befahrenen Fahrspur der Hostfahrzeugposition zu der empfohlenen Fahrspur zu wechseln, abgenommen hat oder nicht.

3. Routenführungssystem nach Anspruch 2, bei dem der Fahrspurführungsverarbeitungsbereich (31) angepasst ist zum Aussetzen der Fahrspurführung, wenn die Anzahl von Fahrspurwechseln abgeommen hat.

4. Routenführungssystem nach einem der Ansprüche 1 bis 3, bei dem der Fahrspurführungsverarbeitungsbereich (31) angepasst ist zum Aussetzen der Fahrspurführung für ein festes Zeitintervall und eine feste Strecke.

5. Routenführungsverfahren mit Schritten zum:
Detektieren einer gegenwärtigen Position eines Hostfahrzeugs als eine Hostfahrzeugposition;
Suchen nach einer spezifizierten Route zu einem Ziel basierend auf der Hostfahrzeugposition;
Einstellen einer empfohlenen Fahrspur auf einer Straße basierend auf der spezifizierten Route;
Durchführen einer Fahrspurführung zum Führen des Hostfahrzeugs in die empfohlene Fahrspur;
Bestimmen einer Bewegung des Hostfahrzeugs bezüglich der empfohlenen Fahrspur basierend auf der Hostfahrzeugposition; und
selektiven Aussetzen der Fahrspurführung basierend auf der bestimmten Bewegung des Hostfahrzeugs.

## Revendications

1. Système de guidage d'itinéraire, comprenant :
une partie de détection de position courante (15, 18) adaptée pour détecter une position courante d'un véhicule hôte comme position de véhicule hôte ;
une partie de traitement de recherche d'itinéraire (31) adaptée pour rechercher un itinéraire spécifié vers une destination sur la base de la position du véhicule hôte ;
une partie de traitement de fixation de voie recommandée (31) adaptée pour fixer une voie recommandée sur une route sur la base de l'itinéraire spécifié ;
une partie de traitement de guidage de voie (31) adaptée pour effectuer un guidage de voie afin d'amener le véhicule hôte dans la voie recommandée ; et
une partie de traitement de détermination de mouvement de véhicule (31) adaptée pour déterminer un mouvement du véhicule hôte par rapport à la voie recommandée sur la base de la position du véhicule hôte,
dans lequel :
la partie de traitement de guidage de voie (31) est adaptée pour suspendre sélectivement le guidage de voie sur la base du mouvement déterminé du véhicule hôte.

2. Système de guidage d'itinéraire selon la revendication 1, dans lequel la partie de traitement de détermination de mouvement de véhicule (31) est adaptée pour déterminer la direction du mouvement du véhicule hôte en se basant sur le fait que le nombre de changements de voie exigé pour passer de la voie de conduite de la position du véhicule hôte à la voie recommandée a diminué ou non.

3. Système de guidage d'itinéraire selon la revendication 2, dans lequel la partie de traitement de guidage de voie (31) est adaptée pour suspendre le guidage de voie lorsque le nombre de changements de voie a diminué.

4. Système de guidage d'itinéraire selon l'une quelconque des revendications 1 à 3, dans lequel la partie de traitement de guidage de voie (31) est adaptée pour suspendre un guidage de voie sur un intervalle de temps fixe et à distance fixe.

5. Procédé de guidage d'un itinéraire, comprenant les étapes consistant à :
détecter une position courante d'un véhicule hôte comme position de véhicule d'hôte ;
chercher un itinéraire spécifié vers une destination sur la base de la position du véhicule hôte ;
fixer une voie recommandée sur une route sur la base de l'itinéraire spécifié ;
effectuer un guidage de voie pour amener le véhicule hôte dans la voie recommandée ;
déterminer un mouvement du véhicule hôte par rapport à la voie recommandée en se basant sur la position du véhicule hôte ; et
suspendre sélectivement le guidage de voie sur la base du mouvement déterminé du véhicule hôte.
